# EUROPÄISCHE PATENTSCHRIFT

(11) **EP 0 425 944 B1**
(45) Veröffentlichungstag und Bekanntmachung des Hinweises auf die Patenterteilung: **05.01.1994**
(21) Anmeldenummer: 90120144.2
(22) Anmeldetag: 20.10.1990
(51) Int. Cl.: B29C 47/88, B29C 47/92

(54) **Extrudieranlage für Kunststoffrohre**
Installation for the extrusion of plastic tubes
Installation d'extrusion pour des tubes en matière plastique

(30) Priorität: 31.10.1989 DE 3936221
(43) Veröffentlichungstag der Anmeldung: 08.05.1991
(73) Patentinhaber: INOEX GmbH, D-32547 Bad Oeynhausen (DE)
(72) Erfinder: Neumann, Ulrich, W-4970 Bad Oeynhausen 1 (DE); Wölfl, Volkmar Rudolf, W-4973 Vlotho-Valdorf (DE)
(74) Vertreter: Cohausz & Florack Patentanwälte

(56) Entgegenhaltungen:
- EP-A- 0 180 571
- EP-A- 0 385 285
- WO-A-90/10530
- FR-A- 2 207 016
- FR-A- 2 375 979
- US-A- 4 152 380
- US-A- 4 740 146
- MASCHINENMARKT, WüRTZBURG 86 Nr. 51, 24. Juni 1980, Seiten 1002 - 1004; U.NEUMANN: 'energieeinsparungen sind bei der kunststoffextrusion noch immer möglich '

## Beschreibung

Die Erfindung bezieht sich auf eine Extrudieranlage für Kunststoffrohre, bestehend aus einem Extruder, einem dem Extruder unmittelbar nachgeordneten, wassergekühlten und das Rohr mit Unterdruck gegen die Innenseite ihrer Wand ziehenden Kalibrierdüse einer Durchlaufkühlkammer für die extrudierten Rohre und einer einen um das Rohr umlaufenden Meßkopf aufweisenden, zwischen der Kalibrierhülse und der Durchlaufkühlkammer angeordneten Wanddickenmeßvorrichtung, wobei entweder in der Innenseite der Wand der nach außen verschlossenen Kalibrierhülse über den Umfang und die Länge verteilte Einlässe für Wasser und Saugöffnungen vorgesehen sind oder die Kalibrierhülse in einer unter Unterdruck stehenden und mit Sprühdüsen für Kühlwasser ausgerüsteten Kühlkammer angeordnet ist und die Einlässe für Wasser und die Saugöffnungen als Bohrungen beziehungsweise Schlitze in der Wand der Kalibrierhülse ausgebildet sind.

Bei einer bekannten Extrudieranlage (US-A-4 740 146) ist eine Durchlaufkühlkammer, die unter Vakuum steht, dem Extruder unmittelbar nachgeordnet. Die Kalibrierung des Rohres erfolgt mittels einer wassergekühlten Kalibrierdüse, die mit einem wassergekühlten Kopf den Eingang der Durchlaufkühlkammer bildet und sich mit ihrem hülsenförmigen, daran anschließenden Teil in die Kühlkammer hinein erstreckt. Der hülsenförmige Teil weist eine Vielzahl von gegeneinander in Umfangsrichtung und in axialer Richtung versetzten Schlitzen oder Bohrungen auf. Zum einen liegt über diesen Schlitzen beziehungsweise Bohrungen das Vakuum der Durchlaufkühlkammer der Außenseite des extrudierten Rohres an, wodurch es gegen die Wandinnenseite der Kalibrierhülse gesaugt wird, und zum anderen wird über diese Schlitze beziehungsweise Bohrungen von Sprühdüsen Wasser der Außenseite des extrudierten Rohres zugeführt. In der Praxis hat sich diese nasse Kalibrierung gegenüber einer Trockenkalibrierung durchgesetzt, weil das Wasser wie ein Schmiermittel zwischen dem extrudierten Rohr und der Wandinnenseite der Hülse wirkt. Die Wanddickenmessung erfolgt mittels in der Kalibrierhülse eingebauter Ultraschallsensoren. Die Wanddicke kann damit nur in den örtlich begrenzten Bereichen der Sensoren gemessen werden. Gewünscht wird aber eine Wanddickenmessung über den gesamten Umfang des Rohres.

Ferner ist es bekannt, die Wanddickenmessung des kalibrierten und durch die Kühlung in einer Durchlaufkühlkammer stabil gemachten Rohres in einer der Durchlaufkühlkammer nachgeordneten Wanddickenmeßvorrichtung vorzunehmen, die mit einer Zentriervorrichtung und einem das Rohr umlaufenden, nach dem Ultraschallmeßprinzip arbeitenden Meßkopf ausgerüstet ist (Maschinenmarkt, Würzburg, Nr. 51 - 24. Juni 1980, Seite 1002 "Energieeinsparungen sind bei der Kunststoffextrusion noch immer möglich" von Ulrich Neumann; Prospekte der Firma INOEX,AUREX 88R,49.0.04/88 D und SCANNER SC88, 52.0.04/88 D; DE 38 06 301 C1).

Ferner ist eine Extrudieranlage bekannt (Report der PLASTIC-INDUSTRIE AUSRÜSTUNGS GMBH, Ringstraße 8-9, D - 4972 Löhne 3, Dezember 1978, "Materialersparnis, aber wie?"), bei der die Wanddickenmessung in einer Vakuumsprühkammer mittels eines umlaufenden Meßkopfes direkt nach der Kalibrierhülse, d.h. ohne daß weitere Einrichtungen zwischen dem Meßkopf und der Kalibrierhülse angeordnet sind, stattfindet. Dabei ist vorgesehen, daß der Meßkopf mit Federkraft elastisch an das Rohr gedrückt wird. Durch diesen direkten Kontakt des Meßkopfes mit dem Rohr besteht die Gefahr, daß der Meßkopf Spuren auf dem Rohr hinterläßt.

Schließlich gehört zum Stand der Technik eine Extrudieranlage (ältere europäische Patentanmeldung EP 0 385 285 A2), bei der der Meßkopf umlaufend um das Rohr unmittelbar hinter der Kalibrierhülse im freien Raum angeordnet ist.

Der Erfindung liegt die Aufgabe zugrunde, eine Extrudieranlage der eingangs genannten Art zu schaffen, bei der bei geringem vorrichtungstechnischen Aufwand die Kalibrierung des extrudierten Kunststoffrohres im Vergleich zum Stand der Technik verbessert ist.

Diese Aufgabe wird bei der Extrudieranlage der eingangs genannten Art dadurch gelöst, daß die Wanddickenmeßvorrichtung in einer unter Unterdruck stehenden und dicht an die Kalibrierhülse angeschlossenen Kammer untergebracht ist, wobei die Kalibrierhülse die Zentrierung des Rohres für den umlaufenden Meßkopf bildet.

Bei der erfindungsgemäßen Extrudieranlage bleiben die Vorteile der nassen Vakuumkalibrierung erhalten, ohne daß dafür eine voluminöse Durchlaufkühlkammer erforderlich ist. Bei der ersten Alternative werden die äußeren Abmessungen durch die nach außen abgeschlossene Kalibrierhülse bestimmt. Bei der zweiten Alternative wird zwar eine Vakuumkammer mit Sprühdüsen benötigt, doch da hier nur bis zur Formstabilität des Rohres abgekühlt zu werden braucht, kann sie im Vergleich zu der nachgeordneten Durchlaufkühlkammer wesentlich kleiner ausgelegt sein. Da die Wanddickenmessung unmittelbar nach der Kalibrierung und damit nahe an der Extruderdüse erfolgt, kann bei außerhalb des Toleranzbereichs liegenden Meßwerten frühzeitig korrigierend an der Extruderdüse eingegriffen werden. Meßfehler infolge unterschiedlicher Temperaturen über den Umfang sind praktisch ausgeschlossen, weil anders als bei der Kühlung in der verhältnismäßig langen Durchlaufkühlkammer durch Aufsprühen von Wasser mittels der Sprühdüsen bei der Kühlung in der Kalibrierdüse eine absolut gleichmäßige Kühlung über den Umfang sichergestellt ist. Weiterhin ist die Abkühlzeit so kurz, daß eventuell kühlungsbedingte Temperaturunterschiede die Meßwerte nicht verfälschen. Auch können die Meßwerte nicht durch sich in einem Wasserfilm auf dem Rohr bildende Luftbläschen bei der Messung nach dem Ultraschallprinzip verfälscht werden, weil die die Meßvorrichtung aufnehmende Kammer dicht an die unter Unterdruck stehende Kalibrierhülse angeschlossen ist und selbst unter Unterdruck steht. Da die unter Unterdruck stehende Kammer auch die Wanddickenmeßvorrichtung aufnimmt, sind nicht nur wegen den fehlenden Luftbläschen auf der Rohroberfläche, sondern auch wegen der Zentrierung des Rohres gegenüber dem Meßkopf die Voraussetzungen für eine möglichst präzise Wanddickenmessung gegeben, ohne daß dafür zusätzliche Zentriermittel, wie Zentrierrollen, notwendig sind.

Im folgenden wird die Erfindung anhand einer ein Ausführungsbeispiel darstellenden Zeichnung näher erläutert. Im einzelnen zeigen:
- Fig. 1: eine Extrudieranlage mit einem Extruder, einer Durchlaufkühlkammer und einer dazwischen angeordneten Wanddickenmeßvorrichtung mit Kalibrierhülse in schematischer Darstellung in Seitenansicht
**und**
- Fig. 2: eine Kalibrierhülse der Extruderanlage der Figur 1 in abgewandelter Ausführung in Seitenansicht und teilweise im Schnitt in vergrößerter Darstellung.

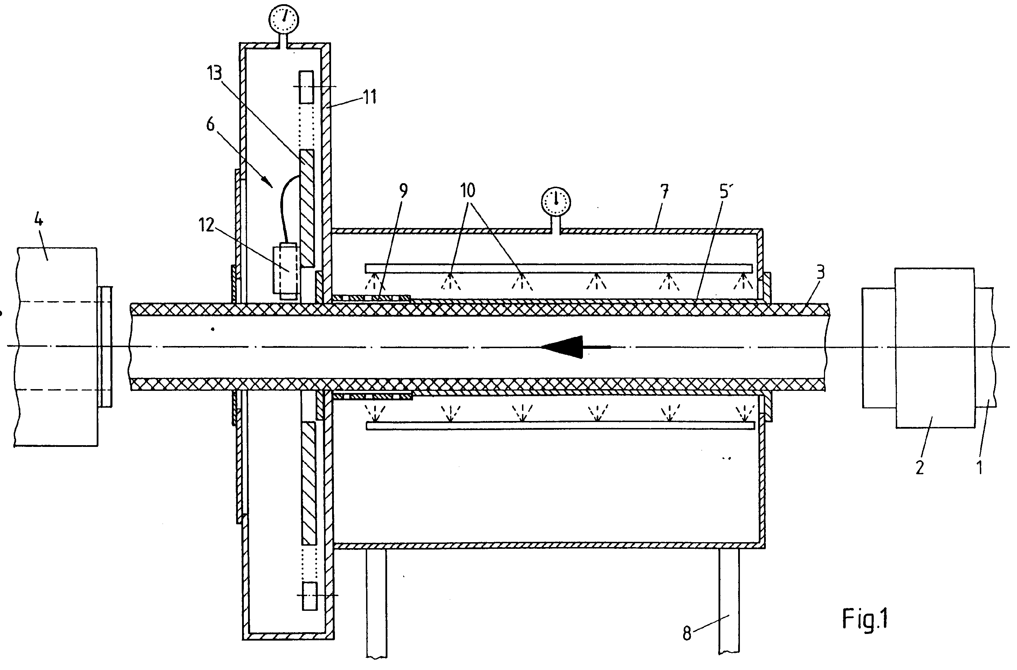

Bei der Extrudieranlage nach Figur 1 sind zwischen einem Extruder 1 mit Extruderdüse 2 für Kunststoffrohre 3 und einer Durchlaufkühlkammer 4, die mit nicht dargestellten, auf das hier schon formstabile Rohr 3 gerichteten Düsen für Kühlwasser ausgerüstet ist, eine Kalibrierhülse 5 und eine Wanddickenmeßvorrichtung 6 angeordnet.

Die Kalibrierhülse 5 erstreckt sich durch eine unter Unterdruck stehende Kammer 7 und wird von ihr getragen. Die Kammer 7 ist auf einem Gestell 8 abgestützt. Die Kalibrierhülse 5 weist in an sich bekannter Weise in ihrer Wand über den Umfang und die Länge verteilt angeordnete Schlitze oder Bohrungen auf. An das Ende der Kalibrierhülse 5 schließt sich mit sehr geringem Abstand zum Rohr 3 ein Führungsstutzen 9 an, der ebenfalls mit Schlitzen beziehungsweise Bohrungen versehen ist. In der Kammer 7 sind wenigstens über die Länge der Zentrierhülse 5 und deren Umfang verteilt angeordnete, auf sie gerichtete Sprühdüsen 10 für Kühlwasser angeordnet. Wegen des Unterdrucks in der Kammer 7 wird das zu kalibrierende Rohr 3 gegen die Innenwandseite der Kalibrierhülse 5 gesaugt. Durch das Kühlwasser der Sprühdüsen 10 wird zum einen die Kalibrierhülse 5 gekühlt und zum anderen gelangt Wasser auf die Außenseite des Rohres 3, das als Schmiermittel zwischen dem Rohr und der Kalibrierhülse 5 wirkt.

An die Kammer 7 ist dicht gegenüber der Außenatmosphäre eine weitere unter Unterdruck stehende Kammer 11 angeschlossen, die die Wanddickenmeßvorrichtung 6 aufnimmt. Über nicht dargestellte, verschließbare Verbindungen kann ein Unterdruckausgleich zwischen beiden Kammern 7,11 vorgenommen werden. Die an sich bekannte Wanddickenmeßvorrichtung 6 (DE 38 06 301 C1) besteht aus einem nach dem Ultraschallprinzip arbeitenden Meßkopf 12, der an einem Führungs- und Antriebsmechanismus 13 rotierend oder reversierend um das Rohr 3 gelagert ist. Wegen der räumlichen unmittelbaren Nachbarschaft der Kalibrierhülse 5 mit dem Führungsstutzen 9 und dem Meßkopf 12 fungiert die Kalibrierhülse 5 mit dem Führungsstutzen 9 als Zentrierung des Rohres 3 für den Meßkopf 12.

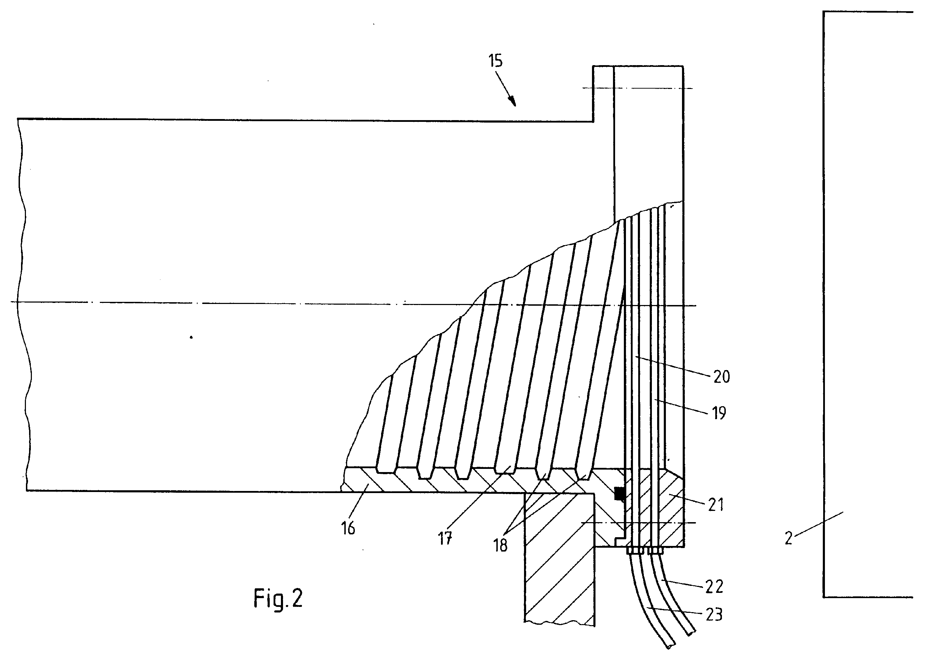

Anstelle der herkömmlichen Kalibrierhülse 5 mit der unter Vakuum stehenden Kammer 7 kann auch die in Figur 2 dargestellte Kalibrierhülse 15 vorgesehen sein. In diesem Fall wird die Kalibrierhülse 15 vom Gestell 8 unmittelbar getragen und ist mit ihrem, in der Zeichnung nicht dargestellten, linken Ende unmittelbar und dicht an die Kammer 11 angeschlossen. Die Kalibrierhülse 15 weist in der Innenseite ihrer Wand 16 schraubenförmig verlaufende Kanäle 17,18 auf, und zwar einen eingängigen Kanal 17 für Unterdruck und einen doppelgängigen Kanal 18 für Kühlwasser. Die Kanäle 17,18 gehen von Ringkanälen 19,20 aus, die in einem angeflanschten Ring 21 untergebracht sind und zu dem Versorgungsleitungen 22,23 führen. Durch das am Kanal 17 anliegende Vakuum wird das extrudierte Rohr gegen die Innenseite der Wand 16 der Kalibrierhülse 15 gesogen und dabei kalibriert, während es durch das über die Kanäle 18 zugeführte Kühlwasser intensiv und gleichmäßig gekühlt und geschmiert wird.

Bei beiden Ausführungsbeispielen hat das die Kalibrierhülse 5,15 verlassende Rohr eine über den Umfang gleichmäßige Temperatur und eine ausreichende Formstabilität, um vom Meßkopf 12 bezüglich seiner Wanddicke unter Ausschluß von temperaturbedingten oder durch Luftbläschen bedingten Meßfehlern vermessen werden zu können. Sollten Unterschiede in der Wanddicke festgestellt werden, dann kann wegen der Nähe des Meßortes von der Extruderdüse 2 mit sehr kurzen Totzeiten auf die Extruderdüse 2 regelnd eingewirkt werden. Während bei herkömmlichen Extrudieranlagen mit der Durchlaufkühlkammer nachgeordneter Wanddickenmeßvorrichtung der Abstand zwischen der Extruderdüse und der Meßvorrichtung mehrere Meter beträgt, liegt er bei der Erfindung unter 2 Meter. Entsprechend diesem Längenunterschied ergibt sich die verkürzte Totzeit für die Regelung.

## Patentansprüche

1. Extrudieranlage für Kunststoffrohre (3), bestehend aus einem Extruder (1), einem dem Extruder (1) unmittelbar nachgeordneten, wassergekühlten und das Rohr (3) mit Unterdruck gegen die Innenseite ihrer Wand (16) ziehenden Kalibrierhülse (5,15) einer Durchlaufkühlkammer (4) für die extrudierten Rohre (3) und einer einen um das Rohr (3) umlaufenden Meßkopf (12) aufweisenden, zwischen der Kalibrierhülse (5,15) und der Durchlaufkühlkammer (4) angeordneten Wanddickenmeßvorrichtung (6), wobei entweder in der Innenseite der Wand (16) der nach außen verschlossenen Kalibrierhülse (15) über den Umfang und die Länge verteilte Einlässe (18) für Wasser und Saugöffnungen (17) vorgesehen sind oder die Kalibrierhülse (5) in einer unter Unterdruck stehenden und mit Sprühdüsen (10) für Kühlwasser ausgerüsteten Kühlkammer (7) angeordnet ist und die Einlässe für Wasser und Saugöffnungen als Bohrungen beziehungsweise Schlitze in der Wand der Kalibrierhülse (5) ausgebildet sind,
**dadurch gekennzeichnet,** daß die Wanddickenmeßvorrichtung (6) in einer unter Unterdruck stehenden und dicht an die Kalibrierhülse (5,15) angeschlossenen Kammer (11) untergebracht ist, wobei die Kalibrierhülse (5,15) die Zentrierung des Rohres (3) für den Meßkopf (12) bildet.

2. Extrudieranlage nach Anspruch 1,
**dadurch gekennzeichnet,** daß bei nach außen verschlossener Kalibrierhülse (15) die Einlässe (18) für Kühlwasser und die Saugöffnungen (17) als schraubenförmig verlaufende Kanäle ausgebildet sind.

## Claims

1. An extrusion installation for plastics tubes (3), comprising: an extruder (1); a water-cooled calibration sleeve (5, 15) disposed immediately downstream of the extruder (1) and pulling the tube (3) by negative pressure against the inside of its wall (16); a continuous cooling chamber (4) for the extruded tubes (3); and a wall thickness measuring device (6) which has a measuring head (12) rotating around the tube (3) and is disposed between the calibration sleeve (5, 15) and the continuous cooling chamber (4), while the inside of the wall (16) of the outwardly closed calibration sleeve (15) is formed with peripherally and longitudinally distributed inlets (18) for water and suction openings (17), or the calibration sleeve (5) is disposed in a cooling chamber (7) which is under negative pressure and has spraying nozzles (10) for cooling water, the inlets for water and suction openings taking the form of bores or slots in the wall of the calibration sleeve (5), characterized in that the wall thickness measuring device (6) is accommodated in a chamber (11) which is under negative pressure and connected sealing-tight to the calibration sleeve (5, 15), the calibration sleeve (5, 15) forming the centring of the tube (3) for the measuring head (12).

2. An extrusion installation according to claim 1, characterized in that with an outwardly closed calibration sleeve (15), the inlets (18) for cooling water and the suction openings (17) take the form of helically extending channels.

## Revendications

1. Installation d'extrusion pour tubes de matière plastique (3), constituée d'une extrudeuse (1), d'une douille de calibrage (5, 15) disposée directement après l'extrudeuse (1), refroidie à l'eau et tirant le tube (3) sous dépression contre la face interne de sa paroi, d'une chambre de refroidissement au passage (4) pour les tubes extrudés (3), et d'un dispositif de mesure de l'épaisseur de la paroi (6) présentant une tête de mesure (12) tournant autour du tube (3) et agencée entre la douille de calibrage (5, 15) et la chambre de refroidissement au passage (4), des orifices d'admission d'eau (18) et des ouvertures d'aspiration (17) répartis à la périphérie et sur la longueur étant prévus sur la face interne de la paroi (16) de la douille de calibrage (15) fermée vers l'extérieur ou bien la douille de calibrage (5) étant agencée dans une chambre de refroidissement (7) qui est sous dépression et est équipée de buses de pulvérisation (10) d'eau de refroidissement et les orifices d'admission d'eau et les ouvertures d'aspiration se présentant sous la forme d'alésages, éventuellement de fentes, dans la paroi de la douille de calibrage (5), caractérisée en ce que le dispositif de mesure de l'épaisseur de la paroi (6) est agencé dans une chambre (11) sous dépression raccordée de manière étanche à la douille de calibrage (5, 15), la douille de calibrage (5, 15) effectuant le centrage du tube (3) pour la tête de mesure (12).

2. Installation d'extrusion selon la revendication 1, caractérisée en ce que les orifices d'admission (18) pour l'eau de refroidissement et les ouvertures d'aspiration (17) sont conformés en canaux s'étendant en hélice lorsque la douille de calibrage (15) est fermée vers l'extérieur.
